# EUROPÄISCHE PATENTSCHRIFT

(11) **EP 1 529 156 B1**
(45) Veröffentlichungstag und Bekanntmachung des Hinweises auf die Patenterteilung: **28.03.2007**
(21) Anmeldenummer: 03793618.4
(22) Anmeldetag: 16.07.2003
(51) Int. Cl.: F01N 3/28, F01N 7/00

(54) **METALLISCHER WABENKÖRPER AUS ZUMINDEST TEILWEISE GELOCHTEN BLECHLAGEN**
METAL HONEYCOMB BODY CONSISTING OF AT LEAST PARTIALLY PERFORATED SHEET METAL LAYERS
ELEMENT ALVEOLAIRE METALLIQUE COMPOSE DE COUCHES DE TOLE AU MOINS PARTIELLEMENT PERFOREES

(30) Priorität: 16.08.2002 DE 10237512; 31.10.2002 DE 10250894; 28.03.2003 DE 10314085
(43) Veröffentlichungstag der Anmeldung: 11.05.2005
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE); HIRTH, Peter, 51503 Rösrath (DE)
(74) Vertreter: Kahlhöfer, Hermann
(86) Internationale Anmeldenummer: PCT/EP2003/007722
(87) Internationale Veröffentlichungsnummer: WO 2004/022937

(56) Entgegenhaltungen:
- WO-A-91/01178
- DE-A- 4 210 784
- US-A- 5 599 509
- US-A- 5 791 043
- PATENT ABSTRACTS OF JAPAN vol. 013, no. 183 (M-820), 28. April 1989 (1989-04-28) & JP 01 012018 A (TOYOTA MOTOR CORP), 17. Januar 1989 (1989-01-17)
- PATENT ABSTRACTS OF JAPAN vol. 018, no. 118 (C-1172), 25. Februar 1994 (1994-02-25) & JP 05 309277 A (TOYOTA MOTOR CORP;OTHERS: 01), 22. November 1993 (1993-11-22)

## Beschreibung

Die vorliegende Erfindung betrifft einen metallischen Wabenkörper, insbesondere einen Wabenkörper für eine Abgasanlage eines Verbrennungsmotors. Solche Wabenkörper werden als Träger für katalytisch aktives Material und/oder für Adsorbermaterial und ähnliche Anwendungen eingesetzt.

Insbesondere zur Reinigung von Abgasen bei Kraftfahrzeugen eingesetzte metallische Wabenkörper müssen sehr unterschiedliche Anforderungen erfüllen, teilweise müssen dabei Kompromisse zwischen sich widersprechenden Anforderungen erzielt werden. Zunächst einmal dienen solche Wabenkörper zur Bereitstellung einer möglichst großen Oberfläche, an der die gewünschten katalytischen Reaktionen oder Adsorptionsprozesse ablaufen können. In vielen Anwendungsfällen wird eine geringe Wärmekapazität gewünscht, damit sich der Wabenkörper entweder schnell auf seine gewünschte Betriebstemperatur aufwärmt oder aber auch eine hohe Wärmekapazität, damit er die Betriebstemperatur eine längere Zeit behalten kann, sich aber nicht zu schnell auf zu hohe Temperaturen aufheizen lässt. Natürlich muss eine solche Anordnung generell mechanisch stabil sein, d. h. einer pulsierenden Gasströmung widerstehen und mechanischen Belastungen durch die Bewegung des Fahrzeuges standhalten können. Sein Material muss hochtemperaturkorrosionsfest sein und sich zumindest so bearbeiten lassen, dass die gewünschten Wabenkörperstrukturen leicht und kostengünstig herstellbar sind. In vielen Fällen werden auch besondere Strukturen innerhalb des Wabenkörpers zur Strömungsbeeinflussung benötigt, beispielsweise zur besseren Kontaktierung der Oberfläche oder zur Quervermischung. Schließlich muss ein geeigneter Wabenkörper in Massenproduktion preisgünstig hergestellt werden können.

In zahlreichen Dokumenten zum Stand der Technik sind einzelne Aspekte der obigen Problemstellungen ausführlich beschrieben.

Man unterscheidet vor allem zwei typische Bauformen für metallische Wabenkörper. Eine frühe Bauform, für die die DE 29 02 779 A1 typische Beispiele zeigt, ist die spiralige Bauform, bei der im wesentlichen eine glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Dabei kommen die Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben. Auch seit langem bekannt ist es, die Blechlagen mit zusätzlichen Strukturen auszustatten, um die Strömung zu beeinflussen und/oder eine Quervermischung zwischen den einzelnen Strömungskanälen zu erreichen. Typische Beispiele für solche Ausgestaltungen sind die WO 91/01178, die WO 91/01807 und die WO 90/08249. Schließlich gibt es auch Wabenkörper in konischer Bauform, gegebenenfalls auch mit weiteren zusätzlichen Strukturen zur Strömungsbeeinflussung. Ein solcher Wabenkörper ist beispielsweise in der WO 97/49905 beschrieben. Darüber hinaus ist es auch bekannt, in einem Wabenkörper eine Aussparung für einen Sensor freizulassen, insbesondere zur Unterbringung einer Lambdasonde. Ein Beispiel dafür ist in der DE 88 16 154 U1 beschrieben.

Seit langer Zeit ist es auch bekannt, geschlitzte Bleche, insbesondere Streckmetall- und ähnliche Schlitzstrukturen für Wabenkörper einzusetzen. Einen Überblick über verschiedene Formen und Anordnungen von Öffnungen in Blechlagen von Katalysatorträgerkörpern gibt die US 5,599,509 mit dem darauf zitierten Stand der Technik. Dort werden Öffnungen gezielt eingesetzt, um die Wärmekapazität im vorderen Bereich eines Wabenkörpers gegenüber dem hinteren Bereich zu verringern.

Obwohl der umfangreiche Stand der Technik viele verschiedene Entwicklungsrichtungen zulässt, bildeten sich einige wenige Entwicklungstrends aus. Einer dieser Trends ist die Entwicklung in Richtung immer dünnerer Metallfolien, um bei geringem Materialeinsatz und geringer Wärmekapazität eine große Oberfläche bereitstellen zu können. Offenkundiger Nachteil dieser Entwicklungsrichtung ist, dass die dünnen Folien mechanisch immer empfindlicher und die daraus hergestellten Wabenkörper weniger haltbar werden. Gleichzeitig entwickelte sich ein Trend in Richtung immer höherer Zelldichten, was in gewissen Grenzen durch die immer dünneren Folien bedingt ist. -Zur Verbesserung des Stoffaustausches mit den Oberflächen eines Wabenkörpers wurden in die Oberflächen Strukturen zur Strömungsbeeinflussung eingebracht, insbesondere sogenannte transversale Strukturen oder es wurden im Inneren eines Wabenkörpers Strömungsleitflächen oder zusätzliche Anströmkanten geschaffen. Obwohl die Vorteile von Öffnungen in den Blechlagen für eine Quervermischung bekannt sind, wurde das systematische Vorsehen von für ein Fluid frei durchgängigen Öffnungen in einem überwiegenden Teil des Katalysatorvolumens bisher praktisch nicht in Betracht gezogen, weil dies dem Trend entgegenläuft, immer größere Oberflächen in immer kleineren Volumina zur Verfügung zu stellen. Während Schlitze und/oder Strömungsleitflächen und ähnliche Strukturen die Oberfläche in einem Wabenkörper nicht verringern, verringern zahlreiche Löcher in erheblichem Maß die Oberfläche und bedeuten zudem, zumindest wenn die Löcher durch Entfernen von Material entstehen, einen Mehrverbrauch an Ausgangsmaterial ohne entsprechenden Zuwachs an Oberfläche, was dem Trend ebenfalls entgegenläuft. Daher wurden Löcher nur in Betracht gezogen, wenn sie ein bestimmte Funktion an einer bestimmten Stelle des Wabenkörpers haben sollten, beispielsweise die Quervermischung oder die Verringerung der Wärmekapazität gegenüber anderen Bereichen.

Diese Betrachtungsweise war isoliert für einen metallischen Wabenkörper sicherlich zutreffend, jedoch darf nicht übersehen werden, dass später ein metallischer Wabenkörper mit einem Beschichtungsmaterial beschichtet wird, welches in vielen Fällen auch noch teure Edelmetalle als katalytisch aktive Komponente enthält. Dadurch bedeutet eine große Oberfläche immer auch eine große Menge an teurem Beschichtungsmaterial. Durch Versuche hat sich überraschenderweise herausgestellt, dass bei bestimmter Dimensionierung von Größe, Verteilung und Dichte einer Vielzahl von Löchern über einen Wabenkörper sich bei kleinerer Oberfläche gleich gute Eigenschaften zur katalytischen Umsetzung ergeben wie bei einem Wabenkörper ohne Löcher und mit einer größeren Menge an Beschichtungsmaterial.

Aufgabe der vorliegenden Erfindung ist es daher, einen metallischen Wabenkörper zu schaffen, der durch geeignete Anzahl, Dimensionierung und Verteilung von Löchern besonders geeignet ist als Träger für eine Beschichtung, insbesondere bei sparsamer Verwendung des Beschichtungsmaterials.

Zur Lösung dieser Aufgabe dient ein metallischer Wabenkörper gemäß dem Anspruch 1. Dieser Wabenkörper mit einer axialen Länge aus Blechlagen, die so strukturiert sind, dass der Wabenkörper von einem Fluid, insbesondere dem Abgas einer Verbrennungsmaschine in einer Strömungsrichtung von einer einströmseitigen Stirnseite zu einer ausströmseitigen Stirnseite durchströmbar ist, wobei die Blechlagen zumindest in Teilbereichen eine Vielzahl von Öffnungen aufweisen, zeichnet sich erfindungsgemäß dadurch aus, dass der Wabenkörper in einem Teilvolumen von mindestens 55 % seiner axialen Länge und mindestens 20 mm radialer Abmessung in allen Blechlagen Löcher aufweist, wobei folgendes gilt:

Die Löcher haben jeweils eine Fläche von 1 und 120 mm²,
In dem Teilvolumen ist die Blechlagenoberfläche durch die Löcher um 10 bis 80 %, vorzugsweise 35 bis 60 %, gegenüber einer ungelochten Blechlage reduziert,
das Teilvolumen hat jeweils einen Abstand von den Stirnseiten des Wabenkörpers, sodass keine Löcher die stirnseitigen Ränder der Blechlagen berühren oder überschneiden.

Es hat sich bei Versuchen gezeigt, dass ein erfindungsgemäßer Wabenkörper mit Löchern aufgrund der verbesserten Strömungseigenschaften in seinem Inneren und die dadurch entstehenden besseren Stoffaustauscheigenschaften zwischen Strömung und Oberfläche in seiner Wirkung einem Wabenkörper ohne Löcher vergleichbar, unter Umständen sogar überlegen ist, obwohl weniger Beschichtungsmaterial eingesetzt wird. Die Löcher sind so groß, dass sie einerseits nicht durch Beschichtungsmaterial beim Beschichten verschlossen werden und dass sie andererseits auch nicht durch Partikel in einem zu reinigenden Fluid verstopft werden. Es handelt sich also nicht um Löcher wie bei einem Filter zur Zurückhaltung von Partikeln, sondern um Öffnungen, die frei von einem zu reinigenden Fluid, insbesondere einem Abgas eines Verbrennungsmotors durchströmt würden können. Aus fertigungstechnischen Gründen und wegen der späteren Haltbarkeit ist es wichtig, dass die stirnseitigen Ränder nicht durch Löcher oder Teile von Löchern ausgefranst werden, weshalb die Löcher einen Abstand zu den Stirnseiten haben sollen.

Wie bereits ausgeführt, haben die Löcher eher Vorteile als Nachteile, weshalb das mit Löchern ausgestattete Teilvolumen mehr als 60 %, vorzugsweise mehr als 90 % des gesamten Wabenkörpervolumens betragen sollte. Auf diese Weise lässt sich der positive Effekt am stärksten zur Geltung bringen.

Aus mechanischen und strömungstechnischen Gründen ist es günstig, wenn die Löcher jeweils eine Fläche von 5 bis 60 mm² aufweisen. In dieser Größenordnung lassen sie sich leicht herstellen, stören nicht einen Beschichtungsprozess und bringen die obigen Vorteile des besseren Stoffaustausches zur Geltung. Löcher dieser Größenordnung erlauben eine gute Quervermischung und erlauben auch eine Wärmeabfuhr vom Inneren des Wabenkörpers nach außen, nicht nur durch Wärmeleitung, sondern auch durch Wärmestrahlung, welche durch die Löcher hindurch in weiter außen liegende Bereiche gelangt. Je größer die Gesamtfläche der Löcher gegenüber der Gesamtfläche der restlichen Blechlagen ist, desto stärker sind natürlich diese Effekte.

Im Stand der Technik sind für vergleichbare Anwendungen fast ausschließlich Öffnungen in den Blechlagen beschrieben, welche eckige Konturen aufweisen. Dies ist aus mechanischer Sicht bei hohen Wechselbelastungen nicht von Vorteil, weil es zur Rissbildung ausgehend von den Ecken der Löcher kommen kann. Deshalb werden bei der vorliegenden Erfindung gerundete Konturen der Löcher bevorzugt, sodass die Begrenzungslinien der Löcher keine Ecken, insbesondere keine spitzen Winkel aufweisen. Besonders bevorzugt sollen die Löcher rund, oval oder elliptisch sein, wobei es empfehlenswert ist, bei nicht runden Formen ein Verhältnis von größtem Durchmesser zu kleinstem Durchmesser von zwei nicht zu überschreiten.

Solche Löcher können allerdings nicht materialsparend hergestellt werden wie z. B. bei Streckmetall möglich, sondern müssen durch Entfernen des Materials aus einer ganzflächigen Blechlage hergestellt werden. Das vorzugsweise ausgestanzte oder ausgeschnittene Material kann jedoch zur Herstellung neuer Blechlagen wiederverwendet werden.

Bevorzugt können je nach Art der Herstellung der Blechlage die Löcher auch schon beim Herstellungsprozess ausgespart werden , was insbesondere für Galvanoplastisch hergestellte Materialen in Betracht kommt. Bei einem Herstellungsverfahren, bei dem zunächst ein billiges Material hergestellt und später durch Beschichten, z. B. mit Aluminium und/oder Chrom, veredelt wird, empfiehlt es sich, die Löcher herzustellen, bevor die Veredelung mit weiteren Materialien stattfindet.

Ein weiterer Vorteil der Erfindung ist, dass die Wärmkapazität eines Wabenkörpers mit Löchern natürlich geringer ist als die Wärmekapazität eines Wabenkörpers ohne Löcher. Dies erlaubt umgekehrt, erfindungsgemäße Wabenkörper aus dickeren Blechlagen herzustellen ohne dass die Wärmekapazität gegenüber Wabenkörpern aus ungelochten dünneren Blechlagen zunimmt. Erfindungsgemäß kann die Dicke der Blechlagen zwischen 20 und 80 µm ,liegen, bevorzugt wird jedoch eine Dicke von 40 und 60 µm. Der bevorzugte Bereich führt zu einer besseren mechanischen Stabilität, insbesondere der Stirnseiten eines Wabenkörpers und erlaubt die Verwendung erprobter Herstellungsverfahren, die sich bei sehr dünnen Folien nicht mehr ohne weiteres anwenden lassen. Trotzdem ist die Wärmekapazität der entstehenden Wabenkörper gleich oder geringer als die bei Wabenkörpern aus dünneren Folien ohne Löcher.

Um die mechanische Stabilität eines erfindungsgemäßen Wabenkörpers sicherzustellen, sollten die Löcher einen Mindestabstand von 0.5 mm aufweisen, wobei vorzugsweise alle Abstände zwischen den Löchern jeweils etwa gleich groß sein sollten, damit keine mechanischen Schwachstellen entstehen. So gestaltete Folien lassen sich problemlos wellen und in den übrigen Arbeitsschritten zur Herstellung von spiraligen oder geschichteten und verschlungenen Wabenkörpern verwenden.

Besonders bevorzugt besteht auch ein erfindungsgemäßer Wabenkörper, wie die meisten im Stand der Technik bekannten, aus abwechselnd angeordneten glatten und gewellten Blechlagen oder aus abwechselnden unterschiedlich gewellten Blechlagen. Durch solche Strukturen entstehen die typischen Strömungskanäle in einem Wabenkörper.

Aufgrund der positiven Wirkungen der Löcher ist für gute Umsetzungseigenschaften der aus den Wabenkörpern später hergestellten katalytischen Konverter nicht erforderlich, dass erfindungsgemäße Wabenkörper eine extrem hohe Zelldichte haben. Erfindungsgemäß werden Zelldichten zwischen 200 und 1000 cpsi (cells per square inch) bevorzugt, insbesondere Zelldichten von 400 und 800 cpsi.

Die erfindungsgemäße Verwendung von Löchern in den Blechlagen beeinträchtigt nicht die Verwendbarkeit der Blechlagen für die meisten bisher bekannten zusätzlichen Strukturen zur Strömungsbeeinflussung wie sie bei der Beschreibung zum Stand der Technik erwähnt wurden. Insbesondere lassen sich die gelochten Blechlagen auch mit transversalen Strukturen, mit Umstülpungen und/oder mit Strömungsleitflächen versehen. Im Allgemeinen unterstützen die Löcher die Wirkung solcher Strukturen noch, weil eventuell in den Kanälen entstehende Druckunterschiede sich durch die Öffnungen ausgleichen, zusätzliche Turbulenzen entstehen und eine Vergleichmäßigung des Strömungsprofils innerhalb des Wabenkörpers bewirkt wird.

Bei der im Stand der Technik vorgeschlagenen Verwendung einer in einen Hohlraum eines Wabenkörpers eingebrachten Sonde, insbesondere einer Lambdasonde, wirkt sich die erfindungsgemäße Ausgestaltung eines Wabenkörpers besonders positiv aus. Da eine Messsonde, insbesondere eine Sauerstoffmesssonde einen möglichst repräsentativen Wert des im Wabenkörper strömenden Fluids messen soll, ist eine Quervermischung vor der Sonde von großem Vorteil. Erfindungsgemäße Wabenkörper eignen sich daher besonders für Anwendungsfälle, in denen eine Lambdasonde in einen Hohlraum des Wabenkörpers eingebracht werden soll.

Fertigungstechnisch erfordert dies einen gewissen Aufwand bei der Herstellung der Blechlagen, damit diese nach dem Zusammenbau später einen geeigneten Hohlraum bilden. Dieser Aufwand ist jedoch heutzutage mit numerisch gesteuerten Ferligungsanlagen beherrschbar. Das erlaubt gleichzeitig, nahe an den den Hohlraum begrenzenden Rändern der Blechlagen keine Löcher zu platzieren, um auch dort ein Ausfransen der Ränder zu vermeiden. Besonders bevorzugt befinden sich daher keine Löcher in einem Bereich von 1 bis 5 mm um den Hohlraum für eine Messsonde.

Für die Haltbarkeit eines Wabenkörpers ist es von Vorteil, wenn die einzelnen Blechlagen untereinander fügetechnisch verbunden sind, vorzugsweise durch Hartlöten, was typischerweise an den Stirnseiten eines Wabenkörpers erfolgt. Dies ist auch ein Grund, weshalb keine Löcher die stirnseitigen Randbereiche der Blechlagen schneiden sollten. Andererseits können die Löcher auch ganz gezielt verhindern, dass an den Stirnseiten aufgebrachter Kleber oder an den Stirnseiten aufgebrachtes Lot entlang der Berührungslinien zwischen den Blechlagen in das Innere des Wabenkörpers dringt, was aus mechanischen Gründen oft unerwünscht ist. Hier bewirken Löcher, dass die Kapillarwirkung endet, sodass der Abstand der Löcher von den Stirnseiten eines Wabenkörpers auch ganz gezielt dazu eingesetzt werden kann, einen Bereich, der durch Löten verbunden wird, zu begrenzen.

Ähnliches gilt auch für die Anbindung der Blechlagen an einem Mantelrohr. Auch dort ist es wegen der gewünschten sehr stabilen Verbindung zum Mantelrohr günstiger, wenn die Randbereiche nicht von Löchern geschnitten werden. Auch hier bewirken die Löcher im übrigen, dass das Lot nicht durch Kapillarwirkung zu weit in das Innere des Wabenkörpers vordringen kann, sondern genau dort bleibt, wo es zum Befestigen der Blechlagen auch gebraucht wird.

Die Größe des Wabenkörpervolumens bei katalytischen Konvertern (Summe der Volumina der Blechlagen sowie den eingeschlossenen bzw. gebildeten Kanälen, Öffnungen, Löchern etc.) hängt beispielsweise von der Positionierung im Abgasstrang ab: Ist er im Motorraum oder in direkter Motornähe (bis 0,5 m) angeordnet, beträgt es üblicherweise weniger als der Hubraum des Motors, z.B. weniger als 50 % des Hubraums, insbesondere weniger als 1 Liter oder 0,5 Liter. Ist er im Unterboden eines PKW angeordnet, kann das Wabenkörpervolumen auch größer als der Hubraum des Motors sein, vorzugsweise zwischen 1 und 5 Litern. Hiervon abweichende Werte können sich also bei anderen Anwendungen ergeben, wie beispielsweise bei einem Einsatz in LKW, Zweikrafträdern, Rasenmähern, handbetriebenen Geräten (Heckenschere, Motorsäge, usw.) oder ähnliches ergeben, wobei hier der jeweilige Fachmann eine entsprechende Anpassung vornehmen kann. Ähnliches gilt bei Wabenkörpern, die als Wärmetauscher, Strömungsmischer, Absorber, Partikelfalle, Rußfilter, elektrischer Heizer in Abgassystemen eingesetzt werden. Auch hier sind dem Fachmann eine Reihe von Versuchen bekannt, die eine Anpassung des Wabenkörpervolumens erlauben.

Bei der Auslegung bzw. Gestaltung des Lochmusters in der Blechlage ist ebenfalls auf den gewünschten Einsatzzweck der Wabenkörper abzustellen. Da in diesem Zusammenhang nicht auf Erfahrungswerte zurückgegriffen werden konnte, hat sich in Versuchen gezeigt, dass die Effekte der Durchmischung bzw. katalytischen Umsetzung bei gleichzeitig deutlich reduziertem Katalysatormaterialeinsatz überraschend gut waren, bei Blechfolien mit Löchern, deren längste Ausdehnung größer als die Strukturbreite der Wellung war, insbesondere mit Löchern, bei denen auch die kleinste Entfernung gegenüberliegender Konturen der Löcher noch größer als die Strukturbreite waren. Dies gilt bevorzugt für die Löcher der zumindest teilweise strukturierten Blechlagen, so dass die Wellung oder Struktur von den Löchern überlagert wird. Besonders vorteilhaft ist es, dass alle Löcher in dem mindestens einen Teilvolumen eine Ausdehnung aufweisen, die größer als die Strukturbreite ist. Überraschend gute Ergebnisse lassen sich mit einem Wabenkörper erzielen, bei dessen Blechfolien die Ausdehnung des Lochs wenigstens doppelt, vorzugsweise viermal, insbesondere sechsmal, so groß wie die Strukturbreite ist.

Gemäß einer vorteilhaften Weiterbildung des Wabenkörpers ist mindestens ein Teil der Löcher als Langloch ausgeführt, deren längste Ausdehnung sich jeweils in Richtung einer eigenen Hauptachse erstreckt, wobei die als Langloch ausgeführten Löcher so angeordnet sind, dass der Wabenkörper Zonen unterschiedlicher Steifigkeit aufweist. Mit Langloch ist in diesem Zusammenhang insbesondere ein Loch gemeint, welches zwei gegenüberliegende gerundete, bevorzugt halbkreisartige, Spitzenbereiche hat, durch deren Maxima beziehungsweise Wendepunkte die Hauptachse definiert wird, wobei das Langloch bevorzugt zwischen diesen Spitzenbereichen parallel zueinander verlaufende Kanten aufweist. Die längste Ausdehnung in Richtung der Hauptachse ist bevorzugt mindestens um den Faktor 2 größer als die Ausdehnung senkrecht zur Hauptachse. Das hat zur Folge, dass zwischen benachbarten Langlöchern Stege gebildet sind. Hier wird nun vorgeschlagen, dass diese Langlöcher so in Bezug auf die Richtung des Umfangs, des Radius, der Mittelachse des Wabenkörpers bzw. der Blechlage oder mindestens zweier dieser Richtungen ausgerichtet werden, dass die Steifigkeit des Wabenkörpers in einer Mehrzahl von Zonen unterschiedlich ist. Unter Steifigkeit ist in diesem Zusammenhang das Ausweich-Verhalten der Zonen auf äußere Kräfte in wenigstens eine der zuvor genannten Richtungen gemeint. Das heißt beispielsweise, dass die Langlöcher in einer ersten (insbesondere gaseintrittsseitigen) und ggf. auch in einer dritten (insbesondere gasaustrittsseitigen) Zone so angeordnet sind, dass der Wabenkörper eine sehr geringe Steifigkeit aufweist, und der Wabenkörper in einer zweiten (insbesondere innenliegenden) Zone relativ steif ausgeführt ist. Betrachtet man beispielsweise das thermische Ausdehnungsverhalten solcher Wabenkörper im Abgassystem eines Automobils, so stellt man fest, dass die Stirnseiten deutlich stärker infolge der thermischen Wechselbeanspruchung expandieren bzw. kontrahieren als mittlere Bereiche des Wabenkörpers. Durch die unterschiedlichen Zonen können solche thermischen Differenzdehnungen oder auch unterschiedliche Krafteinleitungen (z.B. durch Abgaspulsation) kompensiert bzw. unterbrochen werden.

Dabei ist bevorzugt, dass die als Langloch ausgeführten Löcher zumindest teilweise in Richtung eines Umfangs und/oder eines Radius und/oder einer Mittelachse zueinander versetzt und/oder bezüglich ihrer Hauptachsen in einem Winkel angeordnet sind. Das bedeutet beispielsweise, dass:
- die Löcher parallel zum Randbereich zeilenweise angeordnet sind, und dass die in Richtung parallel zum Anbindungsbereich benachbarten (oder Gruppen von benachbarten) Zeilen in Richtung des Randbereichs zueinander versetzt sind (mit gleichem oder variablen Abstand zueinander);
- die Löcher parallel zum Anbindungsbereich zeilenweise angeordnet sind, und dass die in Richtung parallel zum Randbereich benachbarten (oder Gruppen von benachbarten) Zeilen in Richtung des Anbindungsbereichs zueinander versetzt sind (mit gleichem oder variablen Abstand zueinander);
- die Löcher schräg zueinander ausgerichtet sind, insbesondere mit Hauptachsen, die nicht senkrecht bezüglich der Ausrichtung der Rand- bzw. Anbindungsbereiche einen Winkel stehen;
- die Löcher zumindest in Teilbereichen der Zonen eine Art Fachwerk bilden;
- die Löcher unterschiedlich dicke Stege und/oder unterschiedliche Orientierungen der Stege bezüglich des Wabenkörpers generieren; oder
- die Löcher nach hier genannten Unterkombinationen angeordnet sind, um ein unterschiedliches Steifigkeitsverhalten des Wabenkörpers über dessen axiale Länge und/oder dessen Radius und/oder dessen Umfang zu erzeugen.

Ausführungsbeispiele und Einzelheiten der Erfindung, auf die diese jedoch nicht beschränkt ist, werden im folgenden anhand der Zeichnungen näher erläutert, und zwar zeigen:
- Fig. 1: Eine Blechlage zur Herstellung eines erfindungsgemäßen Wabenkörpers,
- Fig. 2: eine perspektivische, teilweise aufgebrochene Ansicht eines erfindungsgemäßen Wabenkörpers,
- Fig. 3: einen teilweise aufgebrochenen katalytischen Konverter mit einem erfindungsgemäßen Wabenkörper und einem Hohlraum für eine Lambdasonde in schematischer Seitenansicht,
- Fig. 4: eine schematische und perspektivische Darstellung einer gewellten Blechlage mit Löchern,
- Fig. 5: schematisch den Ablauf eines Verfahrens zur Herstellung eines erfindungsgemäßen Wabenkörpers,
- Fig. 6: schematisch eine Ausgestaltung einer Blechlage mit Langlöchern, und
- Fig. 7: schematisch einen Wabenkörper mit mehreren Zonen unterschiedlicher Steifigkeit.

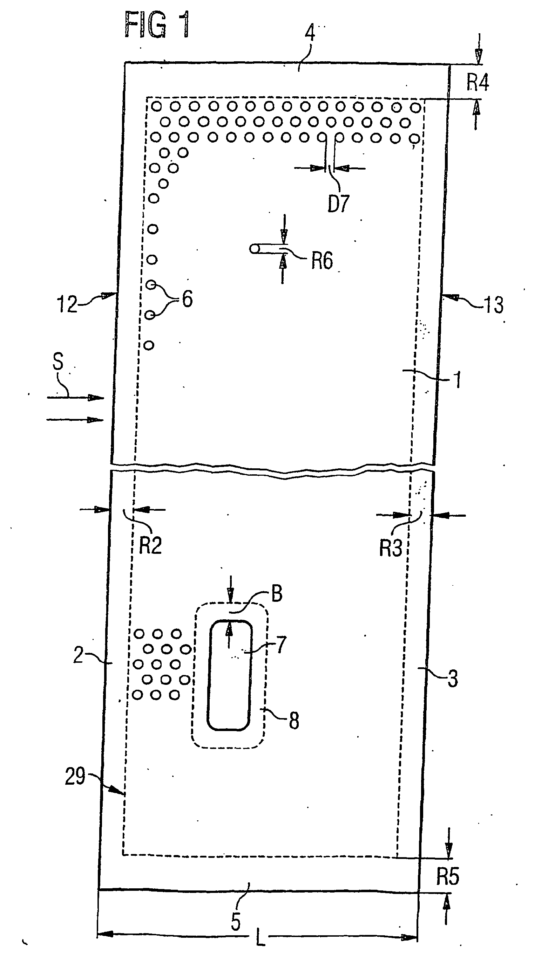

Fig. 1 zeigt eine Blechlage 1, die entweder glatt oder gewellt sein kann, wie sie zum Aufbau eines erfindungsgemäßen Wabenkörpers 15 Anwendung findet. Diese Blechlage 1 hat eine Breite L, die später die axiale Länge L eines daraus hergestellten Wabenkörpers 15 bestimmt. Die Ausdehnung der Blechlage 1 in der anderen Richtung hängt vom Bautyp des herzustellenden Wabenkörpers 15 ab. Sie kann sehr lang sein, wenn ein spiralförmig gewickelter Wabenkörper 15 daraus hergestellt werden soll, oder relativ kurz, wenn sie zu einem Stapel von mehreren solchen Blechlagen 1 gehört, der später zu einem Wabenkörper 15 verschlungen wird. Die Dicke 26 der Blechlage 1 kann zwischen 20 und 80 µm liegen, bevorzugt zwischen 40 und 60 µm.

Die Blechlage 1 weist in einem Teilbereich (hier als Abschnitt 29 gekennzeichnet) eine große Anzahl von Löchern 6 auf, welche jeweils eine Lochfläche 23 zwischen 1 und 120 mm² haben. Bevorzugt werden Löcher 6 mit einem Durchmesser zwischen 3 und 8 mm, vorzugsweise zwischen 4 und 6 mm. Diese Löcher 6 sind zumindest bereichsweise in einem regelmäßigen Muster angeordnet und haben untereinander vorzugsweise gleiche Abstände D7. Dabei ist es jedoch auch möglich, das Muster von der einströmseitigen Stirnseite 12 hin zur ausströmseitigen Stirnseite 13 zu variieren, wobei beispielsweise die Löchrigkeit, die Lochdurchmesser und/oder die Abstände D7 vergrößert werden. Diese Vergrößerung kann kontinuierlich oder in Wertesprüngen erfolgen. Auch ist nach einer Vergrößerung der Werte in einem mittleren Bereich wieder eine Verkleinerung hin zur ausströmseitigen Stirnseite 13 zu bestimmten Einsatzzwecken vorteilhaft. Bevorzugt sind die Löcher 6 rund oder elliptisch oder oval mit einem größten Durchmesser R6 bis zu 8 mm. Die Abstände D7 der Löcher 6 sind so gewählt, dass die Blechlagenoberfläche 24 um 10 bis 80 %, vorzugsweise 30 bis 60%, gegenüber einer ungelochten Oberfläche reduziert ist.

Die Blechlage 1 weist einen einströmseitigen Randbereich 2 auf, der frei von Löchern 6 ist. Bevorzugt ist ein ausströmseitiger Randbereich 3 ebenfalls frei von Löchern 6. Dies vereinfacht die Verarbeitung der Blechlage 1, ermöglicht eine Verbindung von Blechlagen untereinander in diesem Randbereich und verhindert, dass sich beim Aufbau eines Wabenkörpers 15 unregelmäßig geformte (ausgefranste) einströmseitige Stirnseiten 12 oder ausströmseitige Stirnseiten 13 bilden. Der einströmseitige Randbereich hat eine Breite R2 von 1 bis 5 mm, der ausströmseitige Randbereich 3 hat eine Breite R3 von 1 bis 5 mm. Die Blechlage 1 weist außerdem mindestens einen Anbindungsbereich 4 auf, mit dem die Blechlage 1 später an einem Mantelrohr 14 befestigt werden kann. Auch dieser Anbindungsbereich 4 mit der Breite R4 ist vorzugsweise frei von Löchern 6. Für Bauformen von Wabenkörpern 15, bei denen die Blechlagen 1 mit beiden Enden an einem Mantelrohr 14 befestigt werden ist auch ein zweiter Anbindungsbereich 5 mit einer Breite R5 frei von Löchern 6.

Sofern aus der Blechlage 1 ein Wabenkörper 15 hergestellt werden soll, der einen Hohlraum 7 für die Aufnahme einer Messsonde 9 aufweist, ist in der Blechlage 1 ein entsprechender Hohlraum 7 vorzusehen. Dieser ist erfindungsgemäß umgeben von einem lochfreien Rand 8, der wiederum der leichteren Verarbeitbarkeit der Blechlage 1 und der Herstellung eines gleichmäßigen Hohlraumes 7 dient. Die spätere Strömungsrichtung S eines Fluids, welches den Wabenkörper 15 durchströmen kann, ist durch Pfeile in den Figuren angedeutet. Die Strecke B des lochfreien Randes 8 beträgt vorzugsweise über den gesamten Umfang des Hohlraumes mindestens 1 mm.

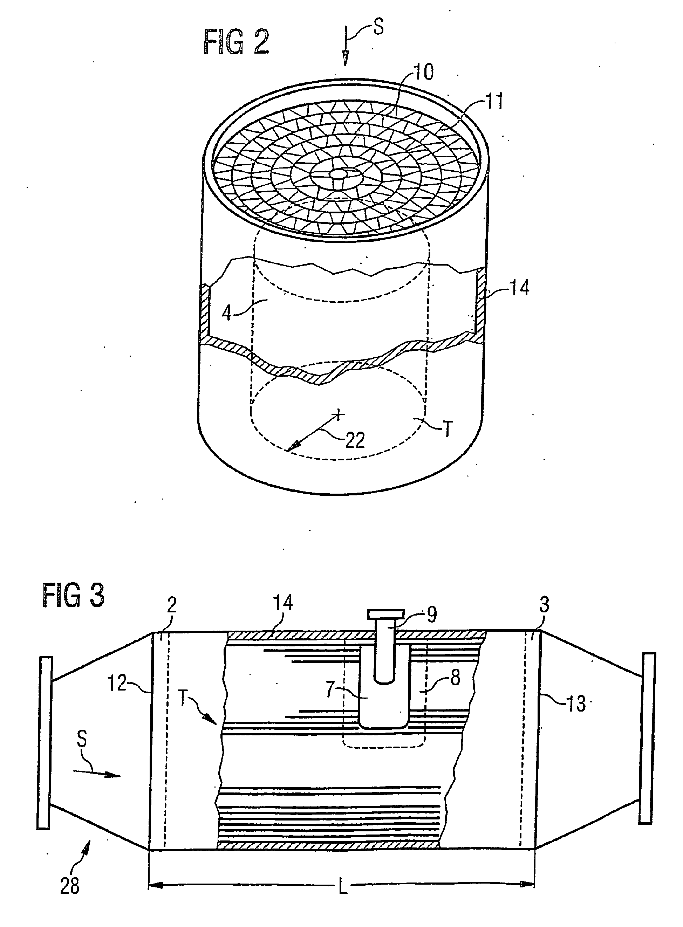

Figur 2 zeigt eine perspektivische Ansicht eines erfindungsgemäßen Wabenkörpers 15, bei dem die Abmessung 22 des gelochten Teilvolumens T schematisch angedeutet ist. Hierbei wird die Abmessung 22 ausgehend von dem Mittelpunkt des Querschnittes des Wabenkörpers umfasst, es ist jedoch auch möglich, dass das Teilvolumen T als eine Art innenliegender, ringförmigen Hohlzylinder ausgebildet ist, bei dem die Abmessung 22 als beliebiger Abschnitt des Durchmessers bzw. Radius des Querschnitts ist. Der beispielhaft gezeigte Wabenkörper 15 ist spiralig gewickelt aus einer glatten Blechlage 10 und einer gewellten Blechlage 11, die in einem Anbindungsbereich 4 mit einem Mantelrohr 14 verbunden sind.

Figur 3 zeigt schematisch in teilweise aufgebrochener Seitenansicht einen katalytischen Konverter 28 mit einem Hohlraum 7 zur Aufnahme einer Lambdasonde 9. Ein Abgas kann in Strömungsrichtung S durch den katalytischen Konverter 28 strömen beginnend von der einströmseitigen Stirnseite 12 hin zur ausströmseitigen Stirnseite 13. An der einströmseitigen Stirnseite 12 befindet sich ein lochfreier Randbereich 2 und an der ausströmseitigen Stirnseite befindet sich ein lochfreier Randbereich 3. Dazwischen befindet sich das gelochte Teilvolumen T welches sich damit über fast die gesamte axiale Länge L des Wabenkörpers 15 erstreckt. Der Wabenkörper 15 weist einen Hohlraum 7 auf, der entweder nach Fertigstellung des Wabenkörpers 15 oder schon vorher durch geeignete Platzierung von Hohlräumen 7 in den einzelnen Blechlagen 10, 11 hergestellt wurde. In diesen Hohlraum 7 kann eine Messsonde 9, insbesondere eine Sauerstoffinesssonde 9 eingebacht werden. Um gleichmäßige Ränder des Hohlraumes 7 zu gewährleisten, umgibt den Hohlraum 7 ein lochfreier Rand 8, in dem die Blechlagen 10,11 keine Löcher 6 aufweisen. Die hier dargestellte Kombination eines Wabenkörpers 15 mit Löchern 6 und einem Hohlraum 7 für eine Messsonde 9 ist besonders vorteilhaft, weil die Löcher 6 stromaufwärts der Messsonde 9 eine Quervermischung im Wabenkörper 15 erlauben und so die Messsonde 9 einen repräsentativen Messwert für die Zusammensetzung des Fluids im gesamten Wabenkörper 15 messen kann.

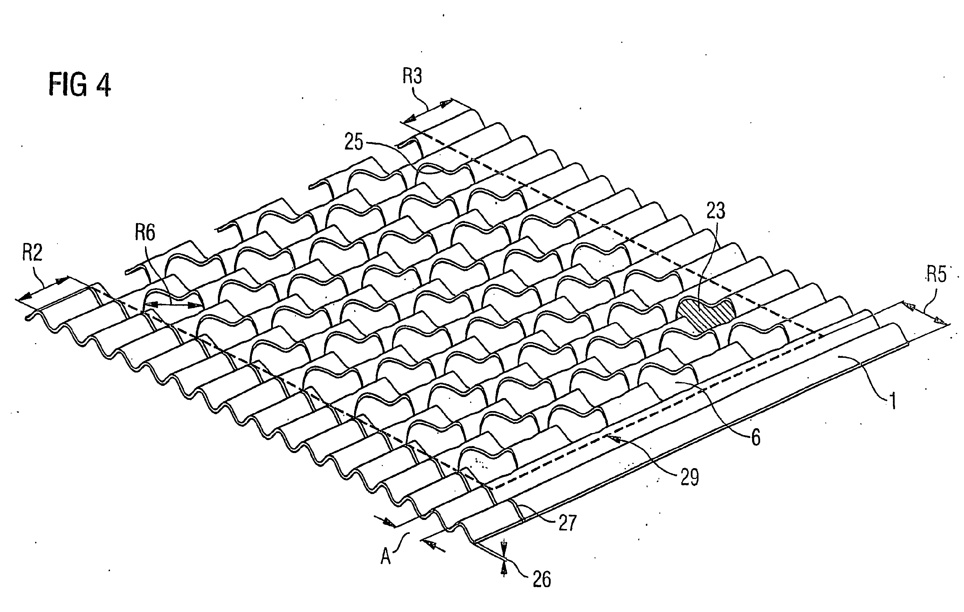

Fig. 4 zeigt eine schematische und perspektivische Darstellung einer gewellten Blechlage 1 mit Löchern 6. Die Wellungen oder Struktur der Blechlage 1 lässt sich beispielsweise durch eine Strukturhöhe H und Strukturbreite A beschreiben.

Die obengenannten Vorteile, insbesondere im Hinblick auf die Quermischung des Abgasstromes sowie die preiswerte Herstellung eines solchen Wabenkörpers 15, lassen sich in besonders gutem Maße verwirklichen, wenn die längste Ausdehnung R6 eines Lochs 6 größer als die Strukturbreite A ist. In dem dargestellten Ausführungsbeispiel haben die Löcher 6 eine Ausdehnung R6 bzw. einen Durchmesser, der in etwa dem Dreifachen der Strukturbreite A der sinusförmigen Wellung der Blechlage 1 entspricht. Dabei sind die Löcher 6 so angeordnet, dass ein regelmäßiges Muster vorliegt, bei dem jeder Wellenberg oder Wellental über die axiale Länge innerhalb des Abschnitts 29, der durch die ungelochten Ränder R3, R2, R5, (R4 nicht dargestellt) der Blechlage 1 begrenzt wird und im Wabenkörper 15 das Teilvolumen T bildet, zumindest von einem Loch 6 unterbrochen ist. Bezüglich des Anteils der Löcher 6 an der Blechlagenoberfläche 24 sei angemerkt, dass insbesondere die Blechlagenoberfläche 24 innerhalb des Abschnittes 29 um 30 - 60 %, und bevorzugt die gesamte Blechlagenoberfläche 24 (also mit den Rändern) um 20 - 40 % reduziert wird.

Um eine möglichst hohe Löchrigkeit in dem Abschnitt 29 zu erreichen ist es vorteilhaft, wie in Fig. 4 dargestellt, dass die Abstände D7 zwischen den Löchern nicht größer als einige Strukturbreiten A ausgeführt sind, insbesondere kleiner als 5, vorzugsweise kleiner 3 Strukturbreiten A der Blechlage 1. Aus Stabilitätsgründen ist es unter Umständen bei besonderen Anwendungen des Wabenkörpers 15 auch möglich, dass die Abstände D7 in unterschiedliche Richtungen (z.B. längs und quer) betragsmäßig voneinander verschieden ausgeführt sind, wobei in eine Richtung bevorzugt der gleiche Abstand D7 zwischen den Löchern 6 eingehalten ist.

Nahe des Randes R2 ist zudem eine Mikrostruktur 27 gezeigt, deren Höhe deutlich kleiner als die Strukturhöhe H ist. Sie dient beispielsweise der Begrenzung des Anbindungsbereiches, da auf diese Weise ein kleiner Spalt zwischen den benachbart angeordneten Blechlagen 1 entsteht, der während eines Lötprozesses verhindert, dass das flüssige Lot sich infolge von Kapillareffekten in dem Abschnitt 29 anlagert und dort u.U. ungewünschte Verbindungen erzeugt.

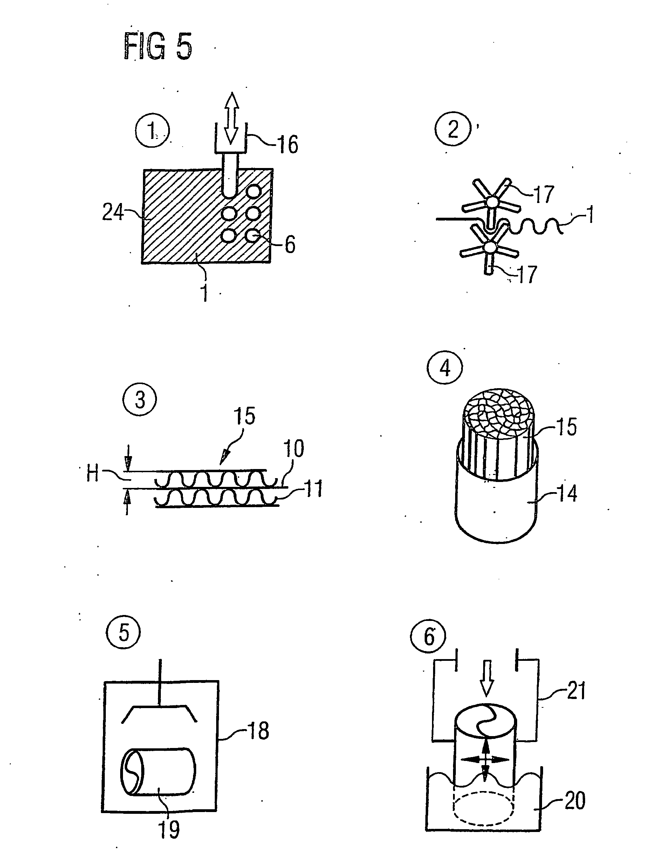

In Fig. 5 ist schematisch ein mögliches, besonders geeignetes Verfahren zur Herstellung eines katalytischen Konverters dargestellt. In einem ersten Schritt werden die Löcher 6 in die Blechlage 1 eingebracht, wobei dies hier mechanisch mittels einer Stanzvorrichtung 16 bewirkt wird. Im nächsten Schritt werden die Strukturen in die gelochte Blechlage 1 mittels zwei ineinandergreifender Profilwerkzeuge 17 erzeugt, so dass gewellte Blechlagen 11 mit einer Strukturhöhe H und einer Strukturbreite A vorliegen. Diese gewellten, zumindest teilweise gelochten Blechlagen 11 werden dann mit glatten Blechlagen 10 (gelocht oder ungelocht) zu einem Wabenkörper 15 gestapelt. Diese Blechlagen 10, 11 werden nun miteinander verwunden und in ein Mantelrohr 14 eingeführt. Nach dem Stapeln und/oder Winden der Blechlagen 10, 11 ist ggf. von Bedeutung, wie die Löcher 6 der Benachbarten Blechlagen 10, 11 zueinander angeordnet sind. Grundsätzlich bietet sich die Möglichkeit, die Löcher zueinander auszurichten, so dass sie sich (nahezu vollständig) überlappen. Das kann beispielsweise vorteilhaft sein, wenn erhöhte Druckverluste (wie sie bei einer stark turbulenten Strömung auftreten können) vermieden werden sollen. Liegt dagegen beim Eintritt in den Wabenkörper 15 eine im wesentlichen gleichmäßige Strömung vor, so ist es vorteilhaft, im Inneren des Wabenkörpers 15 möglichst viele Anströmkanten vorzusehen, die eine Verwirbelung zur Folge haben. Im letztgenannten Fall ist es also sinnvoll, die Löcher 6 der benachbarten Blechlagen 10, 11 versetzt zu einander anzuordnen. Neben den Variationsmöglichkeiten hinsichtlich der relativen Lage der Löcher 6 zueinander ist es auch vorteilhaft, unterschiedliche Ausprägungen der Löcher 6 selbst noch bei der Überlagerung bzw. Überlappung der Löcher 6 in Betracht zu ziehen. So sind beispielsweise unterschiedliche Abstände D7 zueinander, längste Ausdehnung R6 oder Konturen 25 der Löcher 6 selbst, als auch die Relativlage zueinander in den benachbart zueinander angeordneten Blechlagen 10, 11 miteinander zu kombinieren.

Nach einem Belotungsverfahren, bei dem insbesondere die ungelochten Bereiche bzw. Ränder R1, R2, R3, R4 mit Lotmaterial versehen werden (nicht dargestellt), werden die Blechlagen miteinander sowie auch mit dem Mantelrohr 14 in einem Ofen 18 einer thermischen Behandlung unterzogen, insbesondere werden sie unter Vakuum und/oder Schutzgasatmosphäre Hochtemperaturgelötet. Der so hergestellt Trägerkörper 19 nun noch mit einer katalytisch aktiven Beschichtung 20 versehen, um ihn letztlich als katalytischen Konverter im Abgassystem eines Kraftfahrzeuges einsetzten zu können.

Beschichtet wird der Trägerkörper 19 mit sogenanntem Washcoat, der eine sehr zerklüftete Oberfläche aufweist. Diese zerklüftete Oberfläche gewährleistet einerseits ein ausreichend großes Platzangebot für die Fixierung eines Katalysators (z.B. Platin, Rhodium etc.) und dient andererseits zur Verwirbelung des durchströmenden Abgases, wobei ein besonders intensiver Kontakt zum Katalysator bewirkt wird. Der Washcoat besteht gewöhnlich aus einer Mischung eines Aluminiumoxids der Übergangsreihe und mindestens einem Promoteroxid wie beispielsweise Seltenerdoxiden, Zirkonoxid, Nickeloxid, Eisenoxid, Germaniumoxid und Bariumoxid.

Das Auftragen der die Katalyse fördernden hochoberflächigen Washcoat-Schicht erfolgt bekanntermaßen in der Weise, dass der Wabenkörper 15 bzw. der Trägerkörper 19 in eine flüssigen Washcoat-Dispersion getaucht oder mit dieser besprüht wird. Nun besteht aber gerade bei den gelochten Blechlagen 11 die Gefahr, dass die Washcoat-Dispersion die Löcher 6 überzieht und sie verschließt Damit würde sich in dem Teilvolumen T des Wabenkörpers 15 eine geringere Löchrigkeit einstellen als erwünscht, wodurch einerseits die Quermischung der Abgasteilströme, die durch das Auftreffen des Abgases auf die wabenförmige Gestaltung der Stirnseite 12 des Wabenkörpers 15 gebildet werden, vermindert wird, und zusätzlich zuviel Washcoat-Dispersion benötigt wird. Aus diesem Grund erfolgt der Beschichtungsvorgang mit einer Vibrationsanlage 21, welche eine Relativbewegung zwischen der Washcoat-Dispersion und dem Trägerkörper 19 erzeugt.

Diese Relativbewegung umfasst insbesondere kontinuierliches und/oder diskontinuierliches Schwingen, impulsartige Anregung (z.B. ähnlich einem Hammerschlag) oder ähnliche Stimulierungen des Trägerkörpers 19, welche auch in beliebiger Reihenfolge miteinander und/oder in verschiedene Richtungen kombiniert werden können.

Erfolgt eine direkte Anregung der Washcoat-Dispersion, so hat sich beispielsweise eine Frequenz im Ultraschall-Bereich als besonders vorteilhaft erwiesen. Die Anregung erfolgte in einem Frequenzbereich von 20 kHz bis 10 MHz. Insbesondere bei einer indirekten Anregung, also beispielsweise aufgrund einer Vibration des Trägerkörpers 19, haben sich Frequenzen im hörbaren Bereich bewährt, wobei insbesondere eine Anregung mit einer Frequenz zwischen 20 Hz und 15 kHz ein Abfallen der Viskosität der Washcoat-Dispersion über einen sehr langen Zeitraum sichergestellt hat. Das hat zur Folge, dass eine gleichmäßige Verteilung der Dispersion gewährleistet ist. Weiter hat sich als besonders vorteilhaft herausgestellt, den Trägerkörper 19 abschließend, insbesondere nach dem Auftauchen aus dem Beschichtungsbad, noch einmal impulsartig anzuregen, um sicher zu stellen, dass keine Löcher 6 mehr von der Washcoat-Dispersion überzogen sind.

Nachdem die überschüssige Washcoat-Dispersion entfernt ist, wird der Washcoat im Wabenkörper getrocknet und abschließend bei Temperaturen meist über 450 °C kalziniert. Während des Kalzinierens werden die flüchtigen Bestandteile der Washcoat-Dispersion ausgetrieben, so dass eine temperaturbeständige und katalysefordemde Schicht mit hoher spezifischer Oberfläche erzeugt wird. Gegebenenfalls wurde dieser Vorgang mehrfach wiederholt, um eine gewünschte Schichtdicke zu erreichen.

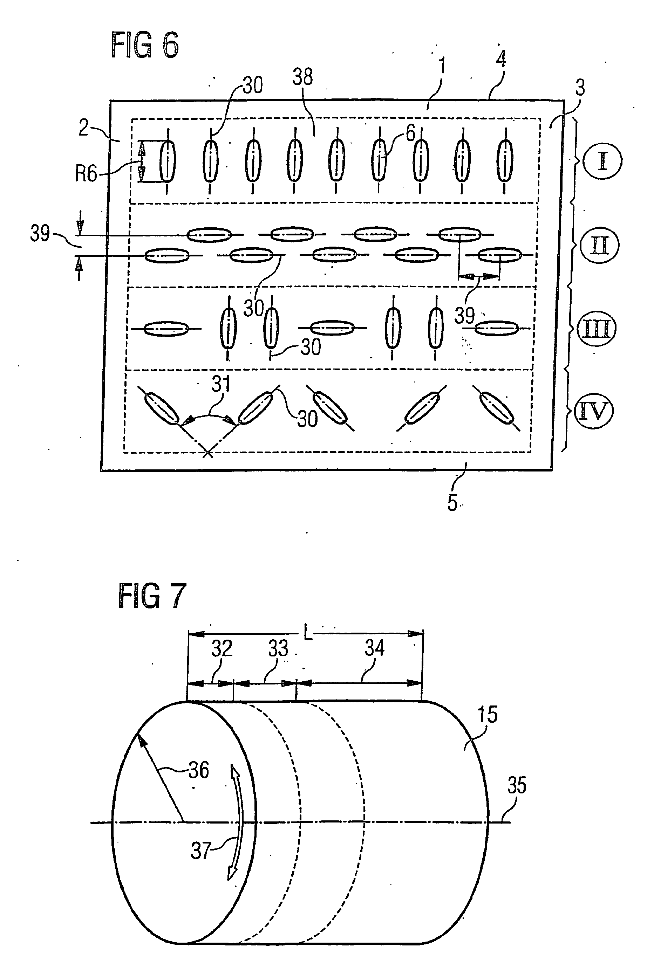

Fig. 6 zeigt schematisch eine Ausgestaltung einer Blechlage 1 mit als Langlöchern ausgebildeten Löchern 6. Die Blechlage 1 ist hier mit ihren Anbindungsbereichen 4,5 und ihren Randbereichen 2,3 dargestellt, wobei darauf hingewiesen sei, dass sich die Löcher 6 nicht über die gesamte Länge und/oder Breite der Blechlage 1 erstrecken muss. Schematisch ist die Blechlage 1 in vier Sektoren unterteilt (gekennzeichnet durch I, II, III, IV). Die als Langloch ausgeführten Löcher 6, deren längste Ausdehnung R6 sich jeweils in Richtung einer eigenen Hauptachse 30 erstreckt, sind in den Sektoren unterschiedlich zueinander angeordent. Die als Langloch ausgeführten Löcher 6 sind zumindest teilweise in Richtung eines Umfangs 37 und/oder eines Radius 36 und/oder einer Mittelachse 35 zueinander versetzt und/oder bezüglich ihrer Hauptachsen 30 in einem Winkel 31 angeordnet sind. Im ersten Sektor haben deren Hauptachsen 30 die gleiche Orientierung, sie sind demnach parallel zueinander. Die dargestellte Zeile von Löchern 6 kann sich nun innerhalb einer Zone 32, 33, 34 ständig wiederholen, es ist jedoch auch möglich, die Zeilen schräg zueinander anzuordnen und/oder die Löcher 6 der Zeilen gegeneinander zu versetzen. In dem zweiten Sektor sind die Langlöcher mit einer anderen Ausrichtung gegenüber denen in dem ersten Sektor dargestellt, wobei die Zeilen innerhalb des zweiten Sektors zueinander versetzt sind. Im dritten Sektor ist zu erkennen, dass auch Kombinationen der beschriebenen Anordnungen der Langlöcher möglich sind.

Im vierten Sektor ist eine relativ steife Anordnung der Langlöcher dargestellt: ein Fachwerk. Die Hauptachsen 30 der benachbarten Löcher 6 stehen dabei in einem Winkel 31 zueinander, der bevorzugt in einem Bereich von 30° bis 60° liegt. Ein solches Fachwerk lässt sich auch dadurch bilden, dass die als Langloch ausgeführten Löcher 6 zeilenweise und bezüglich ihrer Hauptachsen 30 schräg zu den Randbereichen 2, 3 ausgerichtet sind, wobei innerhalb der Zeile alle Langlöcher die gleiche Orientierung haben, während die parallel verlaufenden, benachbarten Zeilen versetzt angeordnet sind , wobei die Langlöcher einem anderen Winkel zu den Randbereichen 2, 3 aufweisen. Bevorzugt sind die Langlöcher der benachbarten Zeilen so angeordnet, dass die Hauptachsen der Löcher 6 einer ersten Zeile senkrecht zu den Hauptachsen der in den benachbarten Zeilen angeordneten Langlöcher ausgerichtet sind und/oder die Hauptachsen der Langlöcher der ersten Zeile das Zentrum der Langlöcher der benachbarten Langlöcher schneiden.

Die Anordnung der Löcher 6 hat zur Folge, dass die Blechlage 1 in den Sektoren unterschiedlich sensibel auf äußere Kräfte reagiert. Sie ist der erste Sektor relativ steif im Hinblick auf Kräfte aus Richtung der Anbindungsbereiche 5,4, allerdings eher elastisch im Hinblick auf Kräfte senkrecht dazu. Gerade umgekehrt verhält es sich mit dem Sektor II. Entsprechend der Orientierung der Löcher 6 kann demnach das Steifigkeitsverhalten des Wabenkörpers 15 zonenweise 32, 33, 34 eingestellt werden. Die Zonen 32, 33, 34 können den Wabenkörper in Richtung der axialen Länge L, des Umfangs 37 oder des Radius 36 unterteilen. Zwar zeigt die Fig. 7 lediglich drei Zonen, es können aber unter Umständen auch zwei oder mehr Zonen vorgesehen sein.

Die vorliegende Erfindung erlaubt es, bei den meisten bekannten Bauformen von Wabenkörpern mit verringertem Einsatz von Beschichtungsmaterial hohe Wirksamkeit der Beschichtung zu erreichen für die Behandlung eines Fluides und dabei noch Eigenschaften bezüglich mechanischer Stabilität, Wärmekapazität, Wärmeleitfähigkeit und dergleichen eines Wabenkörpers gezielt den Bedürfnissen einzelner Anwendungsfälle anpassen zu können.

### Bezugszeichenliste

- 1: Blechlage
- 2: einströmseitiger Randbereich
- 3: ausströmseitiger Randbereich
- 4: Anbindungsbereich
- 5: Anbindungsbereich
- 6: Loch
- 7: Hohlraum
- 8: lochfreier Rand
- 9: Lambdasonde
- 10: glatte Blechlage
- 11: gewellte Blechlage
- 12: einströmseitige Stirnseite
- 13: ausströmseitige Stirnseite
- 14: Mantelrohr
- 15: Wabenkörper
- 16: Stanzvorrichtung
- 17: Profilwerkzeug
- 18: Ofen
- 19 .: Trägerkörper
- 20: Beschichtung
- 21: Vibrationsanlage
- 22: Abmessung
- 23: Lochfläche
- 24: Blechlagenoberfläche
- 25: Kontur
- 26: Dicke
- 27: Mikrostruktur
- 28: Katalytischer Konverter
- 29: Abschnitt
- 30: Hauptachse
- 31: Winkel
- 32: Erste Zone
- 33: Zweite Zone
- 34: Dritte Zone
- 35: Mittelachse
- 36: Radius
- 37: Umfang
- 38: Steg
- 39: Versatz

- A: Strukturbreite
- H: Strukturhöhe
- B: Strecke
- L: axiale Länge
- R2: Breite des einströmseitigen Randbereichs
- R3: Breite des ausströmseitigen Randbereichs
- R4: Breite des Anbindungsbereiches
- R5: Breite des Anbindungsbereiches
- R6: längste Ausdehnung eines Loches
- D7: Abstand zwischen zwei Löchern 6
- S: Strömungsrichtung
- T: Teilvolumen

## Patentansprüche

1. Metallischer Wabenkörper (15) mit einer axialen Länge (L) aufgebaut aus Blechlagen (1; 10, 11), die so strukturiert sind, dass der Wabenkörper (15) von einem Fluid, insbesondere dem Abgas einer Verbrennungsmaschine, in einer Strömungsrichtung (S) von einer einströmseitigen Stirnseite (12) zu einer ausströmseitigen Stirnseite (13) durchströmbar ist, wobei die Blechlagen (1; 10, 11) zumindest in Teilbereichen eine Vielzahl von Öffnungen (6) aufweisen, **dadurch gekennzeichnet, dass** der Wabenkörper (15) in einem Teilvolumen (T) von mindestens 55 % der axialen Länge (L) und mindestens 20 mm radialer Abmessung (22) in allen Blechlagen (1; 10, 11) Löcher (6) aufweist, wobei folgendes gilt:
- die Löcher (6) haben jeweils eine Lochfläche (23) zwischen 1 und 120 mm² und sind durch Entfernen von Material der Blechlagen entstanden,
- in dem Teilvolumen (T) ist die Blechlagenoberfläche (24) durch die Löcher (6) um 10 bis 80 %, vorzugsweise 35 bis 60 %, gegenüber einer ungelochten Blechlage reduziert,
- das Teilvolumen (T) hat jeweils einen Abstand (R2, R3) von den Stirnseiten (12, 13) des Wabenkörpers, so dass keine Löcher (6) die stirnseitigen Ränder der Blechlagen berühren oder überschneiden.

2. Wabenkörper (15) nach Anspruch 1, **dadurch gekennzeichnet, dass** das Teilvolumen (T) mehr als 60 %, vorzugsweise mehr als 90 % des gesamten Wabenkörpervolumens (W) beträgt.

3. Wabenkörper (15) nach Anspruch 1 oder 2, **dadurch gekennzeichnet, dass** die Löcher (6) jeweils eine Lochfläche (23) von 5 bis 60 mm² aufweisen.

4. Wabenkörper (15) nach Anspruch 1, 2 oder 3, **dadurch gekennzeichnet, dass** die Löcher (6) gerundete Konturen (25) aufweisen.

5. Wabenkörper (15) nach Anspruch 1, 2 oder 3, **dadurch gekennzeichnet, dass** die Löcher (6) rund, oval oder elliptisch sind.

6. Wabenkörper (15) nach einem der vorhergehenden Ansprüche, **dadurch gekennzeichnet, dass** die Löcher (6) durch Entfernen von Material aus einer ganzflächigen Blechlage (1) hergestellt sind.

7. Wabenkörper (15) nach einem der Ansprüche 1 bis 5, **dadurch gekennzeichnet, dass** die Löcher (6) schon beim Herstellen der Blechlage (1) ausgespart sind.

8. Wabenkörper (15) nach einem der vorhergehenden Ansprüche, **dadurch gekennzeichnet, dass** die Dicke (26) der Blechlagen (1; 10, 11) 20 bis 80 µm beträgt, vorzugsweise 40 bis 60 µm.

9. Wabenkörper (15) nach einem der vorhergehenden Ansprüche, **dadurch gekennzeichnet, dass** die Löcher (6) untereinander jeweils einen Mindestabstand von 0,5 mm aufweisen, vorzugsweise alle Abstände (D7) zwischen den Löchern jeweils etwa gleich groß sind.

10. Wabenkörper (15) nach einem der vorhergehenden Ansprüche, **dadurch gekennzeichnet, dass** der Wabenkörper (15) aus abwechselnden glatten (10) und gewellten (11) oder aus abwechselnden unterschiedlich gewellten Blechlagen besteht.

11. Wabenkörper (15) nach einem der vorhergehenden Ansprüche, **dadurch gekennzeichnet, dass** der Wabenkörper (15) eine Zelldichte von 200 bis 1000 cpsi (cells per square inch), vorzugsweise von 400 bis 800 cpsi, auf weist.

12. Wabenkörper (15) nach einem der vorhergehenden Ansprüche, **dadurch gekennzeichnet, dass** die Blechlagen (1; 10, 11) zusätzliche Mikrostrukturen (27) zur Strömungsbeeinflussung aufweisen, insbesondere transversale Strukturen und/oder Umstülpungen und/oder Strömungsleitflächen.

13. Wabenkörper (15) nach einem der vorhergehenden Ansprüche, **dadurch gekennzeichnet, dass** der Wabenkörper (15) einen Hohlraum (7) zur Aufnahme eines Sensors, insbesondere einer Lambda-Sonde (9), aufweist, wobei der Hohlraum (7) innerhalb des Teilvolumens (T) oder stromabwärts des Teilvolumens (T) angeordnet ist.

14. Wabenkörper (15) nach Anspruch 13, **dadurch gekennzeichnet, dass** die an den Hohlraum (7) angrenzenden Ränder (8) der Blechlagen (1; 10, 11) auf einer Strecke (B) von 1 bis 5 mm zum Hohlraum (7) lochfrei sind.

15. Wabenkörper (15) nach einem der vorhergehenden Ansprüche, **dadurch gekennzeichnet, dass** die Blechlagen (1; 10, 11) zumindest in Teilbereichen an den Stirnseiten (12, 13) untereinander fügetechnisch verbunden sind, vorzugsweise durch Hartlöten, insbesondere in den nicht gelochten Randbereichen (2, 3).

16. Wabenkörper (15) nach einem der vorhergehenden Ansprüche, **dadurch gekennzeichnet, dass** der Wabenkörper (15) in einem Mantelrohr (14) angeordnet ist, an dem Anbindungsbereiche (4, 5) der Blechlagen (1; 10, 11) innen fügetechnisch befestigt sind, insbesondere durch Hartlöten, wobei das Teilvolumen (T) das Mantelrohr (14) nicht berührt, also in den Anbindungsbereichen (4, 5) der Blechlagen (1; 10, 11), die am Mantelrohr (14) anliegen, keine Löcher (6) vorhanden sind.

17. Wabenkörper (15) nach einem der vorhergehenden Ansprüche, **dadurch gekennzeichnet, dass** die längste Ausdehnung (R6) eines Lochs (6) größer als die Strukturbreite (A) ist, insbesondere ist jede Ausdehnung (R6) größer als die Strukturbreite (A).

18. Wabenkörper (15) nach Anspruch 17, **dadurch gekennzeichnet, dass** alle Löcher (6) in dem mindestens einen Teilvolumen (T) eine Ausdehnung (R6) aufweisen, die größer als die Strukturbreite (A) ist.

19. Wabenkörper (15) nach einem der Ansprüche 17 oder 18, **dadurch gekennzeichnet, dass** die Ausdehnung (R6) des Lochs (6) wenigstens doppelt, vorzugsweise viermal, insbesondere sechsmal, so groß wie die Strukturbreite (A) ist.

20. Wabenkörper (15) nach einem der vorhergehenden Ansprüche, **dadurch gekennzeichnet, dass** mindestens ein Teil der Löcher (6) als Langloch ausgeführt ist, deren längste Ausdehnung (R6) sich jeweils in Richtung einer eigenen Hauptachse (30) erstreckt, wobei die als Langloch ausgeführten Löcher (6) so angeordnet sind, dass der Wabenkörper (15) Zonen (32, 33, 34) unterschiedlicher Steifigkeit aufweist.

21. Wabenkörper (15) nach Anspruch 20, **dadurch gekennzeichnet, dass** die als Langloch ausgeführten Löcher (6) zumindest teilweise in Richtung eines Umfangs (37) und/oder eines Radius (36) und/oder einer Mittelachse (35) zueinander versetzt und/oder bezüglich ihrer Hauptachsen (30) in einem Winkel (31) angeordnet sind.

## Claims

1. A metallic honeycomb body (15) having an axial length (L), comprising sheet-metal layers (1; 10, 11) which are structured in such a way that a fluid, in particular the exhaust gas from an internal combustion engine, can flow through the honeycomb body (15) in a direction of flow (S) from an inflow end side (12) to an outflow end side (13), the sheet-metal layers (1; 10, 11), at least in partial regions, having a multiplicity of openings (6), **characterized in that** the honeycomb body (15) has holes (6) in all the sheet-metal layers (1; 10, 11) in a partial volume (T) which forms at least 55% of the axial length (L) and has a radial dimension (22) of at least 20 mm, and in which the honeycomb body comprises:
- holes (6) each have a hole surface area (23) of between 1 and 120 mm², the holes (6) being formed in the sheet-metal layers (1; 10, 11) by removing material from the sheet-metal layers,
- a partial volume (T), in which the sheet-metal layer surface area (24) is reduced by the holes (6) by 10 to 80%, preferably 35 to 60%, compared to a sheet-metal layer without holes,
- a partial volume (T) that is in each case at a distance (R2, R3) from the end sides (12, 13) of the honeycomb body, so that no holes (6) touch or cut through the end-side edges of the sheet-metal layers.

2. The honeycomb body (15) as claimed in claim 1, **characterized in that** the partial volume (T) amounts to more than 60%, preferably more than 90%, of the total honeycomb body volume (W).

3. The honeycomb body (15) as claimed in claim 1 or 2, **characterized in that** the holes (6) each have a hole surface area (23) of from 5 to 60 mm².

4. The honeycomb body (15) as claimed in claim 1, 2 or 3, **characterized in that** the holes (6) have rounded contours (25).

5. The honeycomb body (15) as claimed in claim 1, 2 or 3, **characterized in that** the holes (6) are round, oval or elliptical.

6. The honeycomb body (15) as claimed in one of the preceding claims, **characterized in that** the holes (6) are formed by removing material from a full-area sheet-metal layer (1).

7. The honeycomb body (15) as claimed in one of claims 1 to 5, **characterized in that** the holes (6) are formed as early as during production of the sheet-metal layer (1).

8. The honeycomb body (15) as claimed in one of the preceding claims, **characterized in that** the thickness (26) of the sheet-metal layers (1; 10, 11) is 20 to 80 µm, preferably 40 to 60 µm.

9. The honeycomb body (15) as claimed in one of the preceding claims, **characterized in that** the holes (6) are each at a minimum distance of 0.5 mm from one another, preferably with all the distances (D7) between the holes being approximately equal.

10. The honeycomb body (15) as claimed in one of the preceding claims, **characterized in that** the honeycomb body (15) comprises alternating smooth (10) and corrugated (11) sheet-metal layers or comprises alternating differently corrugated sheet-metal layers.

11. The honeycomb body (15) as claimed in one of the preceding claims, **characterized in that** the honeycomb body (15) has a cell density of 200 to 1000 cpsi (cells per square inch), preferably of 400 to 800 cpsi.

12. The honeycomb body (15) as claimed in one of the preceding claims, **characterized in that** the sheet-metal layers (1; 10, 11) have additional microstructures (27) for influencing flow, in particular transverse structures and/or projections and/or flow-guiding surfaces.

13. The honeycomb body (15) as claimed in one of the preceding claims, **characterized in that** the honeycomb body (15) has a cavity (7) for accommodating a sensor, in particular a lambda sensor (9), the cavity (7) being arranged within the partial volume (T) or downstream of the partial volume (T).

14. The honeycomb body (15) as claimed in claim 13, **characterized in that** those edges (8) of the sheet-metal layers (1; 10, 11) which adjoin the cavity (7) are free of holes over a path (B) of from 1 to 5 mm to the cavity (7).

15. The honeycomb body (15) as claimed in one of the preceding claims, **characterized in that** the sheet-metal layers (1; 10, 11), at least in partial regions at the end sides (12, 13) are connected to one another by joining, preferably by brazing, in particular in the edge regions (2, 3) without holes.

16. The honeycomb body (15) as claimed in one of the preceding claims, **characterized in that** the honeycomb body (15) is arranged in a tubular casing (14), to which attachment regions (4, 5) of the sheet-metal layers (1; 10, 11) are internally secured by joining, in particular by brazing, the partial volume (T) not touching the tubular casing (14), i.e. no holes (6) being present in the attachment regions (4, 5) of the sheet-metal layers (1; 10, 11) which bear against the tubular casing (14).

17. The honeycomb body (15) as claimed in one of the preceding claims, **characterized in that** the maximum extent (R6) of a hole (6) is greater than the structure width (A), in particular each extent (R6) is greater than the structure width (A).

18. The honeycomb body (15) as claimed in claim 17, **characterized in that** all the holes (6) in the at least one partial volume (T) have an extent (R6) which is greater than the structure width (A).

19. The honeycomb body (15) as claimed in one of claims 17 or 18, **characterized in that** the extent (R6) of the hole (6) is at least twice, preferably four times, in particular six times, as great as the structure width (A).

20. The honeycomb body (15) as claimed in one of the preceding claims, **characterized in that** at least some of the holes (6) are designed as slots whose maximum extent (R6) in each case extends in the direction of a dedicated main axis (30), the holes (6) which are designed as slots being arranged in such a way that the honeycomb body (15) has zones (32, 33, 34) of different rigidities.

21. The honeycomb body (15) as claimed in claim 20, **characterized in that** the holes (6) which are designed as slots are at least in part offset with respect to one another in the direction of a circumference (37) and/or a radius (36) and/or a center axis (35) and/or are arranged at an angle (31) in terms of their main axes (30).

## Revendications

1. Corps en nids d'abeilles métallique (15) avec une longueur axiale (L) construit de couches de tôles (1 ; 10, 11) qui sont structurées de manière telle que le corps en nids d'abeilles (15) peut être traversé par un fluide, notamment par le gaz d'échappement d'une machine à combustion interne dans un sens d'écoulement (S) depuis une face frontale d'arrivée du courant (12) jusqu'à une face frontale de sortie du courant (13), les couches de tôle (1 ; 10, 11) présentant au moins dans des régions partielles une multiplicité d'ouvertures (6), **caractérisé en ce que** le corps en nids d'abeilles (15) a dans un volume partiel (T) d'au moins 55 % de la longueur axiale (L) et d'au moins 20 mm de dimension axiale (22) dans toutes les couches de tôles (1 ; 10, 11) des trous (6), dans quel cas ce qui figure ci-dessous s'applique :
- les trous (6) ont respectivement une surface de trous (23) entre 1 et 120mm² et ont été générés en enlevant du matériau des couches de tôles,
- dans le volume partiel (T) la surface des couches de tôles (24) est réduite par les trous (6) de 10 à 80%, de préférence de 35 à 60 % par rapport à une couche de tôle qui n'est pas trouée,
- le volume partiel (T) a respectivement un espacement (R2, R3) depuis les faces frontales (12, 13) du corps en nids d'abeilles, de sorte qu'il n'y a pas de trous (6) qui touchent ou qui recoupent les bords des faces frontales des couches de tôles.

2. Corps en nids d'abeilles (15) selon la revendication 1, **caractérisé en ce que** le volume partiel (T) comporte plus de 60 %, de préférence plus que 90 % du volume total du corps en nids d'abeilles (W).

3. Corps en nids d'abeilles (15) selon la revendication 1 ou 2, **caractérisé en ce que** les trous (6) ont respectivement une surface de trous (23) de 5 à 60 mm².

4. Corps en nids d'abeilles (15) selon la revendication 1, 2 ou 3, **caractérisé en ce que** les trous (6) ont des contours arrondis (25).

5. Corps en nids d'abeilles (15) selon la revendication 1, 2 ou 3, **caractérisé en ce que** les trous (6) sont ronds, ovales ou elliptiques.

6. Corps en nids d'abeilles (15) selon l'une de revendications précédentes, **caractérisé en ce que** les trous (6) sont fabriqués par l'enlèvement de matériau d'une couche de tôle (1) à surface complète.

7. Corps en nids d'abeilles (15) selon l'une des revendications 1 à 5, **caractérisé en ce que** les trous (6) sont déjà dévidés durant la fabrication de la couche de tôle (1).

8. Corps en nids d'abeilles (15) selon l'une des revendications précédentes, **caractérisé en ce que** l'épaisseur (26) des couches de tôle (1 ; 10, 11) comporte 20 à 80 µm, de préférence 40 à 60 µm.

9. Corps en nids d'abeilles (15) selon l'une des revendications précédentes, **caractérisé en ce que** les trous (6) ont entre eux respectivement un espacement minimal de 0,5 mm, que de préférence tous les espacements (D7) entre les trous ont approximativement la même grandeur.

10. Corps en nids d'abeilles (15) selon l'une des revendications précédentes, **caractérisé en ce que** le corps en nids d'abeilles (15) consiste en des couches de tôles lisses (10) et ondulées (11) s'alternant ou en couches de tôles à ondulation différente et s'alternant.

11. Corps en nids d'abeilles (15) selon l'une des revendications précédentes, **caractérisé en ce que** le corps en nids d'abeilles (15) a une densité cellulaire de 200 à 1000 cpsi (cells per square inch = cellules par pouce carré), de préférence de 400 à 800 cpsi.

12. Corps en nids d'abeilles selon l'une des revendications précédentes, **caractérisé en ce que** les couches de tôles (1 ; 10, 11) ont des microstructures supplémentaires (27) pour influencer le courant, notamment des structures transversales et/ou des relèvements et/ou des surfaces de guidage du courant.

13. Corps en nids d'abeilles (15) selon l'une des revendications précédentes, **caractérisé en ce que** le Corps en nids d'abeilles (15) a une cavité (7) pour recevoir un capteur, notamment une sonde lambda (9), la cavité (7) étant agencée à l'intérieur du volume partiel (T) ou en aval du volume partiel (T).

14. Corps en nids d'abeilles (15) selon la revendication 13, **caractérisé en ce que** les bords (8) des couches de tôles (1 ; 10, 11) adjacents de la cavité (7) sont exempts de trous dans un trajet (B) de 1 à 5 mm vers la cavité (7).

15. Corps en nids d'abeilles (15) selon l'une des revendications précédentes, **caractérisé en ce que** les couches de tôles (1 ; 10, 11) sont, au moins dans des régions partielles, reliées entre elles au niveau des faces frontales (12, 13) par technique de jointoiement, de préférence par le brasage fort, notamment dans les régions de bord (2, 3) qui ne sont pas trouées.

16. Corps en nids d'abeilles (15) selon l'une des revendications précédentes, **caractérisé en ce que** le corps en nids d'abeilles (15) est agencé dans un tube d'enveloppe, sur lequel des régions de raccordement (4, 5) des couches de tôles (1 ;10, 11) sont fixées à l'intérieur par technique de jointoiement, notamment par le brasage fort, le volume partiel (T) ne touchant pas le tube d'enveloppe (14), qu'il n'y a donc pas de trous (6) dans les régions de raccordement (4, 5) des couches de tôles (1 ; 10, 11) qui s'appliquent contre le tube d'enveloppe (14).

17. Corps en nids d'abeilles (15) selon l'une des revendications précédentes, **caractérisé en ce que** l'extension la plus grande (R6) d'un trou (6) est plus grande que la largeur de structure (A), notamment chaque extension (R6) est plus grande que la largeur de structure (A).

18. Corps en nids d'abeilles(15) selon la revendication 17, **caractérisé en ce que** tous les trous (6) ont dans l'au moins un volume partiel (T) une extension (R6), qui est plus grande que la largeur de structure (A).

19. Corps en nids d'abeilles(15) selon l'une des revendications 17 ou 18, **caractérisé en ce que** l'extension (R6) du trou (6) est au moins deux fois, de préférence quatre fois, notamment six fois plus grande que la largeur de structure (A).

20. Corps en nids d'abeilles(15) selon l'une des revendications précédentes, **caractérisé en ce qu'**au moins une partie des trous (6) est réalisée en tant que trou oblong, dont l'extension (R6) la plus longue s'étend respectivement dans le sens d'un axe propre principal (30), dans quel cas les trous (6) réalisés comme trou oblong sont agencés de manière telle que le corps en nids d'abeilles (15) a des zones (32, 33, 34) de rigidité différente.

21. Corps en nids d'abeilles(15) selon la revendication 20, **caractérisé en ce que** les trous (6) réalisés comme trou oblong sont au moins décalés partiellement les uns par rapport aux autres dans le sens d'une circonférence (37) et/ou d'un radius (36) et/ou d'un axe central (35) et/ou agencés par rapport à leurs axes principaux sous un angle (31).
